# EUROPEAN PATENT APPLICATION

(11) **EP 4 671 007 A1**
(43) Date of publication of application: **31.12.2025**
(21) Application number: 25153468.1
(22) Date of filing: 23.01.2025
(51) Int. Cl.: B60H 1/00, A63J 5/00, A63J 25/00, B60K 35/28, B60K 35/80

(54) **METHOD AND DEVICE FOR CONTROLLING VEHICLE, VEHICLE, STORAGE MEDIUM AND PROGRAM PRODUCT**

(30) Priority: 28.06.2024 CN 202410868112
(71) Applicant: Xiaomi EV Technology Co., Ltd., 100176 Beijing (CN)
(72) Inventor: LI, Hongbin, Beijing, 100176 (CN)
(74) Representative: Stöckeler, Ferdinand

(57) **Abstract**

The invention relates to the technical field of intelligent cockpits of vehicles and provides a method and a device for controlling a vehicle, a vehicle, a computer storage medium and a computer program product. A method for controlling a vehicle includes: obtaining (S11) target scene information of a target video and time range information corresponding to the target scene information; and controlling (S12) a target device on the vehicle to run in a running state matching with the target scene information within a time range corresponding to the target scene information during a process of playing the target video; where the target device includes at least one of: an air-conditioner, a seat heating device, an air suspension system, a seat vibrating device, or an electronic fragrance diffuser.

## Description

### TECHNICAL FIELD

The invention relates to the technical field of intelligent cockpits of vehicles, in particular to a method and a device for controlling a vehicle, a vehicle, a computer storage medium and a computer program product.

### BACKGROUND OF THE INVENTION

With intelligent, networked and multi-functional development of automobiles, intelligent interaction of automobile cockpits and operation convenience are of great interest to consumers. Meanwhile, with rapid development of a car audio and video technology, the intelligent cockpits of the automobiles have gradually become new mobile products for entertainment.

### SUMMARY OF THE INVENTION

In order to solve the problems in the related art, the invention provides a method and a device for controlling a vehicle, a vehicle, a computer storage medium and a computer program product, which are intended to control a target device of the vehicle in combination with target scene information of a video, so as to improve entertainment experience of a user in an intelligent cockpit.

According to a first aspect of the examples of the invention, a method for controlling a vehicle is provided, including: obtaining target scene information of a target video and time range information corresponding to the target scene information; and controlling a target device on the vehicle to run in a running state matching with the target scene information within a time range corresponding to the target scene information during a process of playing the target video; where the target device includes at least one of: an air-conditioner, a seat heating device, an air suspension system, a seat vibrating device, or an electronic fragrance diffuser.

In examples of the invention, the target scene information comprises high-temperature scene information, and the target device comprises at least one of the air-conditioner or the seat heating device; and controlling the target device on the vehicle to run in the running state matching with the target scene information within the time range corresponding to the target scene information comprises at least one of: controlling the air-conditioner to heat an in-vehicle environment within a time range corresponding to the high-temperature scene information, or controlling the seat heating device to be turned on within the time range corresponding to the high-temperature scene information.

In examples of the invention, controlling the air-conditioner to heat the in-vehicle environment comprises: controlling the air-conditioner to heat the in-vehicle environment so as to increase a temperature of the in-vehicle environment by a first preset ratio without exceeding a first set temperature.

In examples of the invention, controlling the seat heating device to be turned on comprises: controlling a seat heating device of a seat where a user is seated to be turned on.

In examples of the invention, the target scene information comprises low-temperature scene information, and the target device comprises at least one of the air-conditioner or the seat heating device; and controlling the target device on the vehicle to run in the running state matching with the target scene information within the time range corresponding to the target scene information comprises at least one of: controlling the air-conditioner to cool an in-vehicle environment within a time range corresponding to the low-temperature scene information, or controlling the seat heating device to be turned off within the time range corresponding to the low-temperature scene information.

In examples of the invention, controlling the air-conditioner to cool the in-vehicle environment comprises: controlling the air-conditioner to cool the in-vehicle environment so as to reduce a temperature of the in-vehicle environment by a second preset ratio without being less than a second set temperature.

In examples of the invention, the target scene information comprises wind scene information, and the target device comprises the air-conditioner; and controlling the target device on the vehicle to run in the running state matching with the target scene information within the time range corresponding to the target scene information comprises: controlling the air-conditioner to run in a higher air blowing gear within a time range corresponding to the wind scene information.

In examples of the invention, the target scene information comprises vibration scene information, and the target device comprises at least one of the air suspension system or the seat vibrating device; and controlling the target device on the vehicle to run in the running state matching with the target scene information within the time range corresponding to the target scene information comprises at least one of: controlling the air suspension system to enable a vehicle body to perform at least one of swinging or vibrating within a time range corresponding to the vibration scene information, or controlling the seat vibrating device to be turned on within the time range corresponding to the vibration scene information.

In examples of the invention, controlling the seat vibrating device to be turned on comprises: controlling a seat vibrating device of a seat where a user is seated to be turned on.

In examples of the invention, the target device further comprises a first ambient light; and controlling the target device on the vehicle to run in the running state matching with the target scene information within the time range corresponding to the target scene information comprises: controlling the first ambient light to run in a display mode matching with the target scene information within the time range corresponding to the target scene information.

In examples of the invention, controlling the first ambient light to run in the display mode matching with the target scene information within the time range corresponding to the target scene information comprises: determining a dominant hue of a picture of the target video at a start moment corresponding to the target scene information; and controlling the first ambient light to emit light in a color matching with the dominant hue of the picture within the time range corresponding to the target scene information.

In examples of the invention, the method further comprises: determining video type information of the target video; and controlling a second ambient light to run in a display mode matching with the video type information during the process of playing the target video.

In examples of the invention, the target scene information comprises smell scene information, and the target device comprises the electronic fragrance diffuser; and controlling the target device on the vehicle to run in the running state matching with the target scene information within the time range corresponding to the target scene information comprises: controlling the electronic fragrance diffuser to release a smell matching with the smell scene information within a time range corresponding to the smell scene information.

In examples of the invention, obtaining the target scene information of the target video and the time range information corresponding to the target scene information comprises: identifying the target scene information and the time range information corresponding to the target scene information in real time from the target video based on a scene identification model.

According to a second aspect of the examples of the invention, an device for controlling a vehicle is provided, including: an obtaining module, configured to obtain target scene information of a target video and time range information corresponding to the target scene information; and a controlling module, configured to control a target device on the vehicle to run in a running state matching with the target scene information within a time range corresponding to the target scene information during a process of playing the target video, and where the target device comprises at least one of: an air-conditioner, a seat heating device, an air suspension system, a seat vibrating device, or an electronic fragrance diffuser.

According to a third aspect of the examples of the invention, a vehicle is provided, including: a processor; and a memory configured to store instructions executable by the processor. Where the processor is configured to execute the instructions, such as a computer program, in the memory so as to implement steps of the method for controlling the vehicle provided by the first aspect of the invention.

According to a fourth aspect of the examples of the invention, a non-transitory computer-readable storage medium is provided, storing a computer program, where the computer program, when executed by a processor, implements steps of the method for controlling the vehicle provided by the first aspect of the invention.

According to a fifth aspect of the examples of the invention, a computer program product is provided, including a computer program, where the computer program, when executed by a processor, implements steps of the method for controlling the vehicle provided by the first aspect of the invention.

Technical solutions provided by the examples of the invention may include the following beneficial effects: first, the target scene information of the target video and the time range information corresponding to the target scene information are obtained; and then the target device on the vehicle is controlled to run in the running state matching with the target scene information within the time range corresponding to the target scene information during the process of playing the target video; where the target device includes at least one of: the air-conditioner, the seat heating device, the air suspension system, the seat vibrating device, or the electronic fragrance diffuser. In the invention, the running state of the corresponding target device is controlled based on the target scene information of the target video, the target device is used to provide corresponding sensory experience for the user during a period of playing the video, the problems in the related art that the video play function of the intelligent cockpit is simple, and device control is limited are solved, and the entertainment experience of the user in the intelligent cockpit is improved advantageously.

It is to be understood that the above general description and the following detailed description are merely examples and explanatory instead of limiting the invention.

### BRIEF DESCRIPTION OF DRAWINGS

Accompanying drawings here, which are incorporated in and constitute a part of the specification, illustrate examples consistent with the invention and, together with the specification, serve to explain principles of the invention.
Fig. 1 is a flowchart of a method for controlling a vehicle shown according to an example.
Fig. 2 is a flowchart of controlling a first ambient light shown according to an example.
Fig. 3 is a flowchart of controlling a second ambient light shown according to an example.
Fig. 4 is a flowchart of another method for controlling a vehicle shown according to an example.
Fig. 5 is a schematic diagram of a scene for a method for controlling a vehicle shown according to an example.
Fig. 6 is a block diagram of a device for controlling a vehicle shown according to an example.
Fig. 7 is a block diagram of a vehicle shown according to an example.

### DETAILED DESCRIPTION OF THE INVENTION

The examples will be described in detail here, and their instances are represented in the accompanying drawings. Unless otherwise indicated, when the following description refers to the accompanying drawings, the same number in the different accompanying drawings represents the same or similar elements. Implementations described in the following examples do not represent all implementations consistent with the invention. Rather, they are merely examples of a device and method consistent with some aspects of the invention as detailed in the appended claims.

Implementations described in the following examples of the invention do not represent all implementations consistent with the invention. Rather, they are merely examples of an apparatus and method consistent with some aspects of the invention as detailed in the appended claims.

It needs to be noted that in the invention, all actions of obtaining signals, information or data are performed in accordance with corresponding data protection regulations and policies of a country where it is located and with permission of an owner of the corresponding device.

However, a video play function of current intelligent cockpits is simple and cannot make users have immersive experience while watching a video, so that users' entertainment experience in the intelligent cockpits is poor.

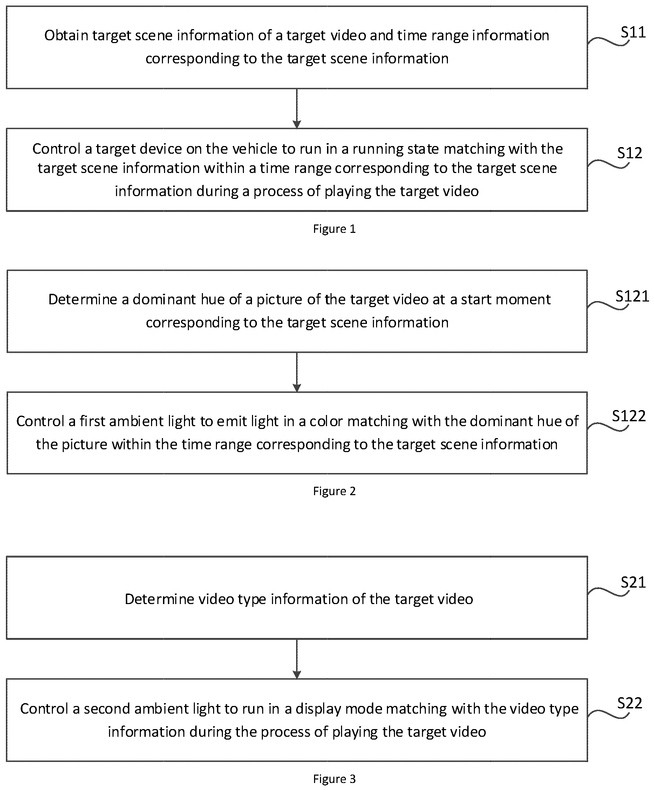

Fig. 1 is a flowchart of a method for controlling a vehicle shown according to an example. As shown in Fig. 1, the method for controlling the vehicle may be performed by a control unit on the vehicle, the control unit may include but is not limited to, for example, a vehicle control unit (VCU), a microcontroller unit (MCU), a cockpit domain controller (CDC), an on board unit, etc., and the method for controlling the vehicle may include steps S11 and S12.

In step 511, target scene information of a target video and time range information corresponding to the target scene information are obtained.

The target video may include a video, such as a movie, a television play, and an animation, capable of being played by an in-vehicle entertainment system. The target video is played on a display screen of the in-vehicle entertainment system so that a user can watch the target video. The target video may be selected by the user, for example, one or more candidate videos may be displayed on the display screen of the in-vehicle entertainment system, so that the user can select the target video expected to be played. Alternatively, the user may select the to-be-played target video based on a target application program installed on a terminal (for example, a mobile phone), and the target video, after be selected, may be played on the display screen of the in-vehicle entertainment system.

Also, the target video may also include a real-time game video played in the in-vehicle entertainment system when it is in an on-board game mode. The on-board game mode refers to a mode of playing a game in the in-vehicle entertainment system. In the on-board game mode, the real-time game video may be played in the in-vehicle entertainment system, for example, including but not limited to a driving simulation, a racing game, e-sports competition and other game pictures.

The target scene information includes scenes in the target video capable of reflecting specific features (such as a temperature feature, a wind feature, a vibration feature, a smell feature and a brightness feature). It needs to be noted that the invention does not limit the target scene information, for example, the target scene information may include at least one of: high-temperature scene information, low-temperature scene information, wind scene information, vibration scene information, smell scene information or strong light scene information.

It may be understood that the high-temperature scene information corresponds to a high-temperature scene in the target video, such as a fire scene, a volcano scene, a desert scene and a scorching sun scene. The low-temperature scene information corresponds to a low-temperature scene in the target video, such as an ice and snow scene and a rainy day scene. The wind scene information corresponds to a scene in the target video involving a wind element, such as a typhoon scene and a tsunami scene. The vibration scene information corresponds to a vibration scene in the target video, such as a falling scene, a vehicle chasing scene, a collision scene and a jolt scene. The smell scene information corresponds to a scene in the target video involving a smell element, such as an ocean scene, a grassland scene, a fresh flower scene, a coffee shop scene and a cooking scene. The strong light scene information corresponds to a strong light scene in the target video, such as a lightning scene and an explosion scene. It is worth noting that examples of the above scenes are merely for describing the invention by examples without limiting the invention.

The invention does not limit a manner of obtaining the target scene information of the target video and the time range information corresponding to the target scene information, for example, the target scene may be identified from the target video based on the scene identification model, so as to obtain the target scene information and the corresponding time range information. An identification process may be performed in real time during the process of playing the target video, or performed in advance before playing the target video, and an identification result (including the target scene information and the corresponding time range information) is associated with the target video. In this way, after the target video is determined to be played, the target scene information related to the target video and the time range information corresponding to the target scene information may be obtained according to the association relationship. In other implementations, the target scene of the target video may be annotated in advance based on manual work, and an annotation result (including the target scene information and the corresponding time range information) is associated with the target video. In this way, after the target video is determined to be played, the target scene information related to the target video and the time range information corresponding to the target scene information may be obtained according to the association relationship.

In step S12, a target device on the vehicle is controlled to run in a running state matching with the target scene information within a time range corresponding to the target scene information during a process of playing the target video; where the target device includes at least one of: an air-conditioner, a seat heating device, an air suspension system, a seat vibrating device, or an electronic fragrance diffuser.

For improving the user experience during a process of watching the target video and making the user have immersive experience, the target device may be controlled to run in the running state matching with the target scene information within the time range corresponding to the target scene information during the process of playing the target video.

It needs to be noted that the invention does not limit the target scene information and the running state matching with the target device. For example, in a case that the target scene information is the high-temperature scene information, the corresponding target device is at least one of the air-conditioner or the seat heating device, a running state of the air-conditioner may be set as a turned-on state and blow hot air, so as to increase a temperature in an in-vehicle environment, and a running state of the seat heating device may be a turned-on state. Thus, the user can have the experience of a high temperature with at least one of the air-conditioner or the seat heating device.

For example, in a case that the target scene information is the low-temperature scene information, the corresponding target device is at least one of the air-conditioner or the seat heating device, a running state of the air-conditioner may be set as a turned-on state and blow cold air, or start other functions (such as a dehumidification function) so as to reduce a temperature in an in-vehicle environment, and a running state of the seat heating device may be a turned-off state. Thus, the user can have the experience of a low temperature based on at least one of the air-conditioner or the seat heating device.

For example, in a case that the target scene information is the wind scene information, the corresponding target device is the air-conditioner, a running state of the air-conditioner may be in a gear higher than a current air blowing gear (such as one, two or three gears higher than the current air blowing gear). Thus, the user can have the experience of wind with the air-conditioner.

For example, in a case that the target scene information is the vibration scene information, the corresponding target device is at least one of the air suspension system or the seat vibrating device, a running state of the air suspension system may be a running state of enabling a vehicle body to perform at least one of swinging or vibrating, and a running state of the seat vibrating device may be a turned-on mode. Thus, the user can have the experience of vibration with at least one of the air suspension system or the seat vibrating device.

For example, in a case that the target scene information is the smell scene information, the corresponding target device is the electronic fragrance diffuser, and a running state of the electronic fragrance diffuser may be to release a smell matching with the smell scene information. In this way, the user can have olfactory experience matching with the target scene while watching the target scene.

For example, in a case that the target scene is the strong light scene information, the target device may also include an ambient light. A running state of the ambient light may be to flicker in a higher brightness. Thus, the user can have the experience of strong light with the ambient light.

A matching relationship between the target scene information and the running state of the target device may be preset. Besides, the matching relationship may be defined or set by the user, so that the user may customize sensory experience in the target scene needed by himself. For example, in a case that the target scene is an ocean scene, not only the running state of the electronic fragrance diffuser can be controlled to release an ocean smell, but also the air-conditioner may be controlled to run in a gear higher than the current air blowing gear (for example, air blowing), so that the user can have the experience of wind while having the olfactory experience of feeling the ocean smell in this scene.

It is worth noting that the user may select a target experience mode from preset experience modes in a case that he wants to play the target video in the in-vehicle entertainment system. For example, the preset experience modes include an immersive experience mode and a normal experience mode. When the user selects the immersive experience mode, performing of the method for controlling the vehicle provided by the invention may be triggered, namely, adaptive control over the running state of the target device according to the target scene of the target video is performed, so an immersive entertainment atmosphere is provided for the user. When the user selects the normal experience mode, the target video may be played in a conventional manner, and the running state of the target device is not adaptively controlled according to the target scene.

In the invention, the running state of the corresponding target device is controlled based on the target scene information of the target video, the target device is used to provide corresponding sensory experience for the user during a period of playing the video, the problems in the related art that the video play function of an intelligent cockpit is simple, and device control is limited are solved, and the entertainment experience of the user in the intelligent cockpit is improved advantageously.

In some examples, obtaining the target scene information of the target video and the time range information corresponding to the target scene information includes: identifying the target scene information and the time range information corresponding to the target scene information in real time from the target video based on the scene identification model.

Using the scene identification model, scene identification may be performed based on an image frame constituting the target video, or scene identification may be performed based on an audio of the target video, or scene identification may be performed by combining the image frame and the audio, which is not limited by the invention. The scene identification model may be obtained by training a sample video and a scene annotation result related to the sample video.

In some examples, the target scene information includes the high-temperature scene information, and the target device includes at least one of the air-conditioner or the seat heating device; and controlling the target device on the vehicle to run in the running state matching with the target scene information within the time range corresponding to the target scene information includes at least one of: controlling the air-conditioner to heat the in-vehicle environment within a time range corresponding to the high-temperature scene information, or controlling the seat heating device to be turned on within the time range corresponding to the high-temperature scene information.

For example, when a high-temperature scene such as the fire scene, the volcano scene, the desert scene and the scorching sun scene is played in the target video, for making the user have the experience of the high temperature, at least one of the following steps may be performed: the air-conditioner be controlled to heat the in-vehicle environment, or the seat heating device be controlled to be turned on.

Based on the above examples, controlling the air-conditioner to heat the in-vehicle environment may include: controlling the air-conditioner to heat the in-vehicle environment so as to increase the temperature of the in-vehicle environment by a first preset ratio without exceeding a first set temperature.

It needs to be noted that the invention does not limit the first preset ratio and the first set temperature. For example, the first preset ratio is 10%, 20%, 30%, etc.; and the first preset temperature is 30°C, 33°C, 35°C, etc.

For example, the first preset ratio is 30%; and the first preset temperature is 35°C. Thus, the user can be prevented from feeling uncomfortable due to too high temperature in the in-vehicle environment while the experience of the high temperature is provided for the user.

In some examples, controlling the seat heating device to be turned on includes: controlling a seat heating device of a seat where a user is seated to be turned on.

For example, a seat where the user is seated may be determined based on a pressure detection result obtained by a pressure sensor on the seat, or the seat where the user is seated is determined based on a temperature detection result obtained by an infrared sensor on the seat. In this way, the seat heating device of the seat where the user is seated may be controlled to be turned on, so as to provide the experience of the high temperature for the user, and reduce resource consumption caused by starting a seat heating device of a seat where no user is seated.

In example of the invention, at least one of the following steps may be performed: the air-conditioner be controlled to heat the in-vehicle environment within the time range corresponding to the high-temperature scene information, or the seat heating device be controlled to be turned on within the time range corresponding to the high-temperature scene information, so that the user may have the experience of the high temperature while watching a video content corresponding to the high-temperature scene information.

In some examples, the target scene information includes the low-temperature scene information, and the target device includes at least one of the air-conditioner or the seat heating device; and controlling the target device on the vehicle to run in the running state matching with the target scene information within the time range corresponding to the target scene information includes at least one of: controlling the air-conditioner to cool the in-vehicle environment within a time range corresponding to the low-temperature scene information, or controlling the seat heating device to be turned off within the time range corresponding to the low-temperature scene information.

For example, when a low-temperature scene such as a snowy day scene and the rainy day scene is played in the target video, for making the user have the experience of the low temperature, at least one of the following steps may be performed: the air-conditioner be controlled to cool the in-vehicle environment, or the seat heating device be controlled to be turned off.

Based on the above examples, controlling the air-conditioner to cool the in-vehicle environment may include: controlling the air-conditioner to cool the in-vehicle environment so as to reduce the temperature of the in-vehicle environment by a second preset ratio without being less than a second set temperature.

It needs to be noted that the invention does not limit the second preset ratio and the second set temperature. For example, the second preset ratio is 10%, 20%, 30%, etc.; and the second set temperature is 12°C, 15°C, 18°C, etc.

For example, the second preset ratio is 30%; and the second set temperature is 12°C. Thus, the user can be prevented from feeling uncomfortable due to too low temperature of the in-vehicle environment while the experience of the low temperature is provided for the user.

In examples of the invention, at least one of the following steps may be performed: the air-conditioner be controlled to cool the in-vehicle environment within the time range corresponding to the low-temperature scene information, or the seat heating device be controlled to be turned off within the time range corresponding to the low-temperature scene information, so that the user may have the experience of the low temperature while watching a video content corresponding to the low-temperature scene information.

In some examples, the target scene information includes the wind scene information, and the target device includes the air-conditioner; and controlling the target device on the vehicle to run in the running state matching with the target scene information within the time range corresponding to the target scene information includes: controlling the air-conditioner to run in a higher air blowing gear within the time range corresponding to the wind scene information.

For example, when a wind scene such as the typhoon scene and the tsunami scene is played in the target video, for making the user have the experience of wind, the air-conditioner may be controlled to run in the higher air blowing gear. For example, when the air-conditioner does no blow air currently, the air-conditioner may be controlled to run in a low air blowing gear; when the current air-conditioner is in the low air blowing gear, the air-conditioner may be controlled to run in a medium air blowing gear; and for another example, controlling the air-conditioner to run in the higher air blowing gear may include: controlling the air blowing gear of the air-conditioner to increase by one gear without exceeding a maximum air blowing gear.

In examples of the invention, the air-conditioner may be controlled to run in the higher air blowing gear within the time range corresponding to the wind scene information, so that the user may have the experience of wind while watching a video content corresponding to the wind scene information.

In some examples, the target scene information includes the vibration scene information, and the target device includes at least one of the air suspension system or the seat vibrating device; and controlling the target device on the vehicle to run in the running state matching with the target scene information within the time range corresponding to the target scene information includes at least one of: controlling the air suspension system to make a vehicle body at least one of swing or vibrate within a time range corresponding to the vibration scene information; or controlling the seat vibrating device to be turned on within the time range corresponding to the vibration scene information.

For example, when a vibration scene such as the falling scene, the vehicle chasing scene, collision scene and the jolt scene is played in the target video, for making the user have the experience of vibration, a height of the air suspension system may be controlled to enable a vehicle body to perform at least one of swinging or vibrating.

It is worth noting that the vehicle body may vibrate in a plurality of directions, such as a horizontal direction and a vertical direction, and swinging of the vehicle body may include at least one of swing right and left, or swing pitch back and forth.

In some examples, different vibration scenes may correspond to at least one of: different height control strategies of the air suspension system (so as to enable at least one of a swinging or vibration amplitude of the vehicle body to differ), or different vibration control strategies of the seat vibrating device (so as to make a vibration amplitude of the seat differ). For example, in the falling scene, at least one of the following steps may be performed: the height of the air suspension system be controlled to change (so as to enable the vehicle body to perform at least one of swinging or vibrating violently), or the seat vibrating device is controlled to vibrate in a large vibration amplitude (so as to make the seat vibrate violently); in the vehicle chasing scene or the collusion scene, at least one of the following steps may be performed: the height of the air suspension system be controlled to change (so as to enable the vehicle body to perform at least one of swinging or vibrating moderately), or the seat vibrating device is controlled to vibrate in a medium vibration amplitude (so as to make the seat vibrate moderately); and in the jolt scene, at least one of the following steps may be performed: the height of the air suspension system be controlled to change (to enable the vehicle body to perform at least one of swinging or vibrating slightly), or the seat vibrating device is controlled to vibrate in a small vibration amplitude (so as to make the seat vibrate slightly).

In some examples, controlling the seat vibrating device to be turned on includes: controlling a seat vibrating device of a seat where a user is seated to be turned on. In this way, the seat vibrating device in the seat where the user is seated may be controlled to be turned on, so as to provide the experience of vibration for the user, and reduce resource consumption caused by starting a seat vibrating device in a seat where no user is seated.

In examples of the invention, at least one of the following steps may be performed: the air suspension system be controlled to enable a vehicle body to perform at least one of swinging or vibrating, or the seat vibrating device be controlled to be turned on within the time range corresponding to the vibration scene information, so that the user may have the experience of vibration while watching a video corresponding to the vibration scene information.

In some examples, the target scene information includes the smell scene information, and the target device includes the electronic fragrance diffuser; and controlling the target device on the vehicle to run in the running state matching with the target scene information within the time range corresponding to the target scene information includes: controlling the electronic fragrance diffuser to release a smell matching with the smell scene information within the time range corresponding to the smell scene information.

For example, the electronic fragrance diffuser may be set to be capable of releasing various smells. In a case that the target scene is the ocean scene, the running state of the electronic fragrance diffuser may be controlled to release an ocean smell; in a case that the target scene is the grassland scene, the running state of the electronic fragrance diffuser may be controlled to release a grass smell; in a case that the target scene is a fresh flower scene, the running state of the electronic fragrance diffuser may be controlled to release a fresh flower smell; in a case that the target scene is the coffee shop scene, the running state of the electronic fragrance diffuser may be controlled to release a coffee smell; and in a case that the target scene is the cooking scene, the running state of the electronic fragrance diffuser may be controlled to release a food smell.

In examples of the invention, by controlling the running state of the electronic fragrance diffuser to release the smell matching with the smell scene information, the user can have the olfactory experience matching with the target scene while watching the target scene, so as to further the immersive atmosphere feeling of the user.

In some examples, the target device further includes a first ambient light; and controlling the target device on the vehicle to run in the running state matching with the target scene information within the time range corresponding to the target scene information includes: controlling the first ambient light to run in a display mode matching with the target scene information within the time range corresponding to the target scene information.

The first ambient light may be an ambient light corresponding to the target scene, namely, the ambient light needing to be controlled to match a current scene atmosphere while playing the target scene.

The display mode is used to represent a visual effect or a functional characteristic presented by the ambient light during working, and different display modes may correspond to different visual effects. The display mode may include but is not limited to the following characteristic parameters: a light emitting color, a light emitting brightness, a flicker frequency, a light spot pattern and the like. The display mode may be used to enrich the visual effects of the ambient light and meet demands in different scenes.

A matching relationship between the target scene information and the display mode of the first ambient light may be preset. Besides, the matching relationship may be defined or set by the user, so that the user may customize needed sensory experience in the target scene. For example, it may be preset that different target scenes correspond to different light emitting colors of the first ambient light, so that a color atmosphere presented in the vehicle further fits the corresponding target scene.

By controlling the first ambient light to match the target scene, the user may have immersive experience on the scene while watching the target scene, so as to further improve the immersive feeling and entertainment experience of the user.

Please continue to refer to Fig. 2, which is a flowchart of controlling a first ambient light shown according to an example. As shown in Fig. 2, controlling the first ambient light to run in the display mode matching with the target scene information within the time range corresponding to the target scene information may be implemented based on steps S121 and S122.

In step S121, a dominant hue of a picture of the target video at a start moment corresponding to the target scene information is determined.

In step S122, the first ambient light is controlled to emit light in a color matching with the dominant hue of the picture within the time range corresponding to the target scene information.

It needs to be noted that the dominant hue of the picture (or called a dominant hue) refers to a color occupying a largest area or a most conspicuous position in an image or a picture, and the dominant hue of the picture usually determines a whole visual effect and an emotional keynote of the picture.

Further, the invention does not limit the manner of determining the dominant hue of the picture, for example, a color distribution of each pixel in the picture may be analyzed based on a method such as a color histogram and a clustering analysis (such as K-means clustering), and then the dominant hue of the picture is identified.

For example, for making the user quickly enter the scene corresponding to the target video and experience an atmosphere corresponding to the target scene information, the dominant hue of the picture of the target video at the start moment corresponding to the target scene information may be determined, and then the first ambient light is controlled to emit light in the color matching with the dominant hue of the picture within the time range corresponding to the target scene information. For example, the light emitting color of the first ambient light may be controlled to be the same as the dominant hue of the picture.

For example, the target scene may include the desert scene, and the dominant hue of the picture at a start moment of the desert scene is yellow, which represents desert. For making the user quickly enter the atmosphere of the desert scene, the light emitting color of the first ambient light may be controlled to match the dominant hue of the picture. Namely, at the start moment of the desert scene during playing the target video, the first ambient light may be controlled to emit yellow light, so as to enhance the visual experience of the user and improve the immersive feeling.

For another example, the target scene may include the rainy day scene, and the dominant hue of the picture at the start moment of the rainy day scene is grey, which represents a cloudy or rainy day. In this scene, the first ambient light may be controlled to emit grey light, so that the user can feel the atmosphere of a rainy day and the immersive feeling while watching the target video is improved.

Please continue to refer to Fig. 3, which is a flowchart of controlling a second ambient light shown according to an example. Based on the examples, the method for controlling the vehicle further includes steps S21 and S22.

In step S21, video type information of the target video is determined.

In step S22, the second ambient light is controlled to run in a display mode matching with the video type information during the process of playing the target video.

The second ambient light is an ambient light corresponding to the target video, namely, the second ambient light needs to remain a turned-on state during playing the target video, and is independent of the above first ambient light.

It needs to be noted that the invention does not limit the video type information, including, for example, a horror movie, an action movie, an affectional movie, a war movie, a science fiction movie, a comedy movie, a feature movie, a game, etc.

Further, the invention does not limit the manner of determining the video type information, for example, the whole content or clips of the target video may be identified based on a video classification model so as to obtain the video type information; or the video type information may be obtained directly from a category table of a database storing the target video.

Further, a matching relationship between the video type information and the display mode of the second ambient light may refer to a matching relationship between the video type information and the light emitting color of the second ambient light. Each piece of video type information may correspond to different light emitting colors of ambient lights, which may be defined by the user and is not limited here by the invention.

For example, the horror movie is set to correspond to green, so that an atmosphere of being horrible and thrilling is presented by using the second ambient light when playing the horror movie; the action movie is set to correspond to red, so that an atmosphere being intense and stimulating is presented by using the second ambient light when playing the action movie; the affectional movie is set to correspond to pink, so that an atmosphere of being romantic and affectional is presented by using the second ambient light when playing the affectional movie; the war movie is set to correspond to dark blue, so that an atmosphere of being repressed and serious is presented by using the second ambient light when playing the war movie; the science fiction movie is set to correspond to silver, so that an atmosphere with a sense of science and technology and a sense of the future is presented by using the second ambient light when playing the science fiction movie; the comedy movie is set to correspond to yellow, so that an atmosphere of being bright and lively is presented by using the second ambient light when playing the comedy movie; and the feature movie is set to correspond to brown, so that an atmosphere of being relatively neural and accommodating various emotions is presented by using the second ambient light when playing the feature movie.

In examples of the invention, after the video type information of the target video is determined, the second ambient light may be controlled to emit light in the light emitting color matching with the video type information, so that the user may have the color atmosphere corresponding to a video type while watching the target video, the user can conveniently and quickly enter a plot, and the entertainment experience of the user in the intelligent cockpit is improved.

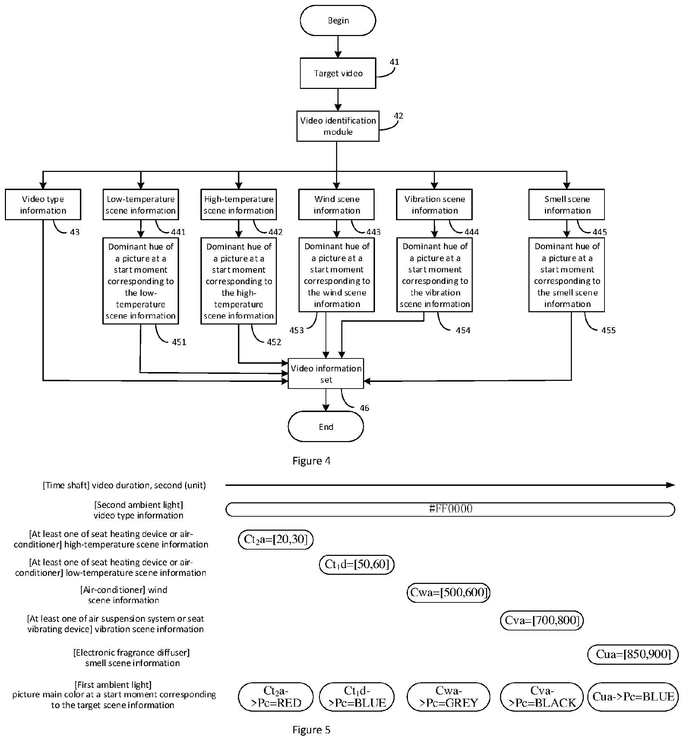

The method for controlling the vehicle provided by the invention is further described below in combination with Fig. 4 and Fig. 5. As shown in Fig. 4, first, the target scene information, the video type information 43, the time range information corresponding to the target scene information, the dominant hue of the picture at the start moment of the target scene and other information are obtained by identifying the target video 41 based on a video identification module 42. The video identification module may include a scene identification model, a video classification model and a dominant hue of a picture extraction model, which are respectively used to identify the scene, the video type and the dominant hue of the picture of the target video. A process of identifying the target video may be implemented before playing the target video, or implemented in real time during playing the target video, which is not limited by the invention.

As shown in Fig. 4, a video information set 46 may be obtained after the target video is identified. The video information set 46 may include the video type information 43, one or more pieces of target scene information, and information of the dominant hue of the picture corresponding to the start moment of the target scene. For example, the target scene information may include but is not limited to: the low-temperature scene information 441, the high-temperature scene information 442, the wind scene information 443, the vibration scene information 444 and the smell scene information 445. The information of the dominant hue of the picture corresponding to the start moment of the target scene includes dominant hue of a picture at a start moment corresponding to the low-temperature scene information 451, dominant hue of a picture at a start moment corresponding to the high-temperature scene information452, dominant hue of a picture at a start moment corresponding to the wind scene information 453, dominant hue of a picture at a start moment corresponding to the vibration scene information 454 and dominant hue of a picture at a start moment corresponding to the smell scene information 455.

For example, the video type may include: the horror movie Tk, the action movie Td, the affectional movie Ta, the war movie Tz, the science fiction movie Th, the comedy movie Tx and the feature movie Tj.

A low-temperature scene may include: the rainy day scene Ct₁d and the ice and snow scene Ct₁e.

A high-temperature scene may include: the fire scene Ct₂a, the volcano scene Ct₂b, and the scorching sun scene Ct₂c.

A wind scene may include: the typhoon scene Cwa and the tsunami scene Cwb.

A vibration scene may include: the falling scene Cva, the vehicle chasing scene Cvb, the collision scene Cvc, and the jolt scene Cvd.

The smell scene information may include: the ocean scene Cua, the grassland scene Cub, fresh flower scene Cuc, and the coffee shop scene Cud.

Further, the light emitting color of the second ambient light may also be determined according to the video type information, and regarding a specific determining manner reference may be made to the above examples and is not described in detail here again. Green is represented by #FF0000, pink is represented by #FFC0CB, silver is represented by #C0C0C0, yellow is represented by #FFFF00, and brown is represented by #A52A2A.

For example, the following video information set 46 is obtained after the target video information is identified: video type information: Tk =horror movie; the corresponding light emitting color of the second ambient light is #FF0000; the high-temperature scene information: Ct₂a=[20, 30], which represents that the 20^{th} second to the 30^{th} second in the target video is the fire scene; the low-temperature scene information: Ct₁d=[50, 60], which represents that the 50^{th} second to the 60^{th} second in the target video is the rainy day scene; the wind scene information Cwa=[500, 600], which represents that the 500^{th} second to the 600^{th} second in the target video is the typhoon scene; the vibration scene information: Cva=[700, 800], which represents that the 700^{th} second to the 800^{th} second in the target video is the falling scene; and the smell scene information: Cua=[850, 900], which represents that the 850^{th} second to the 900^{th} second in the target video is the ocean scene.

Further, the video information set 46 may also include the dominant hue of the picture corresponding to the start moment of the target scene. For example, Ct₂a->Pc=RED, which represents that when the Ct₂a scene starts, the dominant hue of the picture is extracted as red; Ct₁d->Pc=BLUE, which represents that when the Ct₁d scene starts, the dominant hue of the picture is extracted as blue; Cwa->Pc=GREY, which represents that when the Cwa scene starts, the dominant hue of the picture is extracted as grey; Cva->Pc=BLACK, which represents that when the Cva scene starts, the dominant hue of the picture is extracted as black; and Cua->Pc=BLUE, which represents that when the Cua scene starts, the dominant hue of the picture is extracted as blue.

As shown in Fig. 5, after the video information set 46 is obtained, the video information set 46 may be mapped to a specific effect unit, namely, the running state of the corresponding target device is obtained, and thus the target device may be controlled to run in the running state corresponding to the target scene information within the time range corresponding to the target scene information according to a sequence of a timer shaft during the process of playing the target video.

For example, the light emitting color of the second ambient light is controlled to be green during the process of playing the target video. When the target video is played to reach the 20^{th} second, it is confirmed that the current scene is the fire scene, at least one of the following steps may be performed: the air-conditioner is controlled to heat the in-vehicle environment, or the seat heating device is controlled to be turned on, and meanwhile the light emitting color of the first ambient light is controlled to be red till reaching the 30^{th} second; when the target video is played to reach the 50^{th} second, it is confirmed that the current scene is the rainy day scene, at least one of the following steps may be performed: the air-conditioner is controlled to cool the in-vehicle environment, or the seat heating device is controlled to be turned off, and meanwhile the light emitting color of the first ambient light is controlled to be blue till reaching the 60^{th} second; when the target video is played to reach the 500^{th} second, it is confirmed that the current scene is the typhoon scene, the air-conditioner is controlled to run in the higher air blowing gear, and meanwhile the light emitting color of the first ambient light is controlled to be grey till reaching the 600^{th} second; when the target video is played to reach the 700^{th} second, it is confirmed that the current scene is the falling scene, at least one of the following steps may be performed: the air suspension system is controlled to enable a vehicle body to perform at least one of swinging or vibrating, or the seat vibrating device is controlled to be turned on, and meanwhile the light emitting color of the first ambient light is controlled to be black till reaching the 800^{th} second; and when the target video is played to reach the 850^{th} second, it is confirmed that the current scene is the ocean scene, the electronic fragrance diffuser is controlled to release the ocean smell, and meanwhile the light emitting color of the first ambient light is controlled to be blue till reaching the 900^{th} second.

In some implementations, after one target scene is finished, the running state of the target device may be controlled to be recovered to a running state at a previous moment before the start moment of the target scene. For example, each target device has its own initial running state, during the process of playing the target video, when it enters a certain target scene, the corresponding target device is controlled to switch from the initial running state to the running state matching with the target scene, and after the target scene is finished, the corresponding target device is switched from the running state matching with the target scene back to the initial running state.

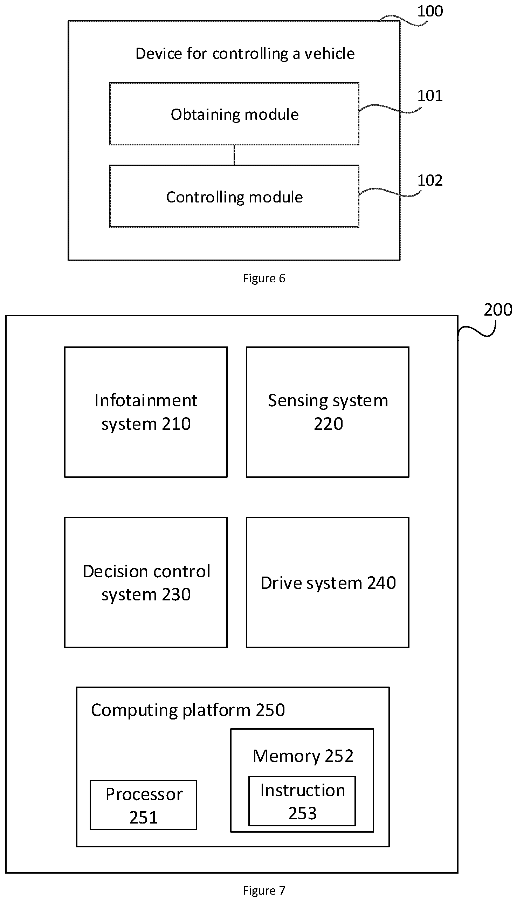

Please refer to Fig. 6, which is a block diagram of a device for controlling a vehicle shown according to an example. Referring to Fig. 6, the device 100 for controlling the vehicle may include an obtaining module 101 and a controlling module 102.

The obtaining module 101 is configured to obtain target scene information of a target video and time range information corresponding to the target scene information.

The controlling module 102 is configured to control a target device on the vehicle to run in a running state matching with the target scene information within a time range corresponding to the target scene information during a process of playing the target video; where the target device includes at least one of: an air-conditioner, a seat heating device, an air suspension system, a seat vibrating device, or an electronic fragrance diffuser.

In some examples, the controlling module 102 is further configured to at least one of control the air-conditioner to heat an in-vehicle environment within a time range corresponding to high-temperature scene information, or control the seat heating device to be turned on within the time range corresponding to high-temperature scene information.

In some examples, the controlling module 102 is further configured to control the air-conditioner to heat the in-vehicle environment so as to increase a temperature of the in-vehicle environment by a first preset ratio without exceeding a first set temperature.

In some examples, the controlling module 102 is further configured to control a seat heating device of a seat where a user is seated to be turned on.

In some examples, the controlling module 102 is further configured to at least one of control the air-conditioner to cool an in-vehicle environment within a time range corresponding to low-temperature scene information, or control the seat heating device to be turned off within the time range corresponding to low-temperature scene information.

In some examples, the controlling module 102 is further configured to control the air-conditioner to cool the in-vehicle environment so as to reduce a temperature of the in-vehicle environment by a second preset ratio without being less than a second set temperature.

In some examples, the controlling module 102 is further configured to control the air-conditioner to run in a higher air blowing gear within a time range corresponding to wind scene information.

In some examples, the controlling module 102 is further configured to at least one of: control the air suspension system to make a vehicle body at least one of swing or vibrate within a time range corresponding to vibration scene information, or control the seat vibrating device to be turned on within the time range corresponding to vibration scene information.

In some examples, the controlling module 102 is further configured to control a seat vibrating device of a seat where a user is seated to be turned on.

In some examples, the controlling module 102 is further configured to control a first ambient light to run in a display mode matching with the target scene information within the time range corresponding to the target scene information.

In some examples, the controlling module 102 is further configured to determine a dominant hue of a picture of the target video at a start moment corresponding to the target scene information and control the first ambient light to emit light in a color matching with the dominant hue of the picture within the time range corresponding to the target scene information.

In some examples, the controlling module 102 is further configured to determine video type information of the target video; and control a second ambient light to run in a display mode matching with the video type information during the process of playing the target video.

In some examples, the controlling module 102 is further configured to control the electronic fragrance diffuser to release a smell matching with the smell scene information within a time range corresponding to smell scene information.

In some examples, the obtaining module 101 is further configured to identify the target scene information and the time range information corresponding to the target scene information in real time from the target video based on a scene identification model.

As for the device 100 in the examples, a specific mode of each module for executing an operation has been described in detail in the examples related to the method, which is not described in detail here again.

The invention further provides a non-transitory computer-readable storage medium, storing computer program instructions, and the program instructions, when executed by a processor, implement steps of the method for controlling the vehicle provided by the invention.

Fig. 7 is a block diagram of a vehicle shown according to an example. For example, the vehicle 200 may be a hybrid vehicle, and may also be a non-hybrid vehicle, an electric vehicle, a fuel cell vehicle or other types of vehicles. The vehicle 200 may be an autonomous vehicle, a semi-autonomous vehicle or a non-autonomous vehicle.

Referring to Fig. 7, the vehicle 200 may include various sub-systems, for example, an infotainment system 210, a sensing system 220, a decision control system 230, a drive system 240 and a computing platform 250. The vehicle 200 may further include more or less sub-systems, and each sub-system may include a plurality of components. Besides, the various sub-systems as well as the various components of the vehicle 200 may be interconnected in a wired or wireless mode.

In some examples, the infotainment system 210 may include a communication system, an entertainment system, a navigation system and the like.

The sensing system 220 may include several sensors configured to sense information of an environment around the vehicle 200. For example, the sensing system 220 may include a global positioning system (the global positioning system may be GPS, and may also be a Beidou system or other positioning systems), an inertial measurement unit (IMU), a laser radar, a millimeter-wave radar, an ultrasonic radar and a camera device.

The decision control system 230 may include a computing system, a vehicle control unit, a steering system, an accelerator and a braking system.

The drive system 240 may include an assembly for providing power for the vehicle 200 to move. In an example, the drive system 240 may include an engine, an energy source, a transmission system and wheels. The engine may be one of an internal-combustion engine, an electric motor or a compressed air engine, or a combination of some of them. The engine can convert energy provided by the energy source into mechanical energy.

Some or all functions of the vehicle 200 are controlled by the computing platform 250. The computing platform 250 may include at least one processor 251 and a memory 252, and the processor 251 may execute instructions 253 stored in the memory 252.

The processor 251 may be any conventional processor, such as a commercially available CPU. The processor may further include, for example, a graphic process unit (GPU), a field programmable gate array (FPGA), a system on Chip (SOC), an application specific integrated circuit (ASIC) or a combination of them.

The memory 252 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

In addition to the instructions 253, the memory 252 may further store data, for example, a road map, route information, a location, an orientation and a speed of a vehicle, and other data. The data stored in the memory 252 may be utilized by the computing platform 250.

In examples of the invention, the processor 251 may perform the instructions 253, so as to complete all or some steps of the methods for controlling the vehicle.

In an example, a non-transitory computer-readable storage medium including instructions is further provided, such as a memory 804 including the instructions. The above instructions may be executed by a processor 820 of a device 800 so as to complete the methods. For example, the non-transitory computer-readable storage medium may be an ROM, a random access memory (RAM), a CD-ROM, a magnetic tape, a floppy disk, an optical data storage device and the like.

In another example, a computer program product is further provided, the computer program product includes a computer program capable of being executed by a programmable device, and the computer program has a code part which is used for performing, when executed by the programmable device, the method for controlling the vehicle.

Those skilled in the art may also know that various illustrative logical blocks and steps listed in the examples of the invention may be implemented by electronic hardware, computer software or a combination of the both. Whether such functions are implemented by hardware or software depends on a specific application and a design demand of a whole system. Those skilled in the art may use various methods for implementing the functions for each specific application, but such implementation is not construed as departing from the protection scope of the examples of the invention.

In the above detailed description, with reference to the accompanying drawings, specific aspects capable of implementing the invention are illustrated. In this regard, terms for indicating directions or representing position relationships such as "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial" and "circumferential" may be used with reference to orientations illustrated in the figures. Components of described devices may be positioned in many different orientations, so the directional terms may be used for description but not for limiting. It is to be understood that other aspects may be used and structural or logical variations may be made without departing from a concept of the invention. Thus, the following detailed description is not to be regarded as limiting.

It is to be understood that unless otherwise stated particularly, various features of some examples of the invention described here may be mutually combined. As used here, a term "and/or" includes any one of related listed items and any combination of any two or more of them. Similarly, "at least one of..." includes any one of related listed items and any combination of any two or more of them.

It is to be understood that unless otherwise specified and limited clearly, terms used in the examples of the invention such as "joint", "adherence", "mount", "connection", "connected" and "fix" are to be understood in a broad sense, for example, it may be a fixed connection, or a detachable connection or be integrated; it may be a mechanical connection, or an electrical connection or mutual communication; it may be a direct connection, or an indirect connection through an intermediate medium; and it may be communication between interiors of the two elements or an interaction relationship between the two elements, unless otherwise limited clearly. Specific meanings of the above terms here may be understood by those ordinarily skilled in the art according to specific conditions.

Besides, a word "on..." in a sentence "a component, element or material layer formed 'on' a surface or located 'on' the surface" may be used to represent here that the component, element or material layer is "indirectly" positioned (for example, placed, formed, deposited, etc.) on the surface so that one or more additional components, elements or layers may be arranged between the surface and the component, element and material layer. However, the word "on..." in a sentence "a component, element or material layer formed 'on' a surface or located 'on' the surface" may alternatively have a specific meaning: the component, element or material layer is "directly" positioned (for example, placed, formed, deposited, etc.) on the surface, for example, direct contact with the surface.

Various members, components, regions, layers or segments may be described by using terms such as "first", "second" and "third" here, but are not limited by these terms. On the contrary, these terms are merely for distinguishing one member, component, region, layer or segment from another member, component, region, layer or segment. Thus, without departing from teachings of various examples, a first member, component, region, layer or segment mentioned in the examples described here may also be called a second member, component, region, layer or segment. Besides, terms "first" and "second" are merely used for description instead of being understood as indicating or implying a relative significance or implicitly indicating the quantity of technical features referred to. Thus, features limited by "first" and "second" may explicitly or implicitly include at least one of the features. In the description here, "a plurality of" means at least two, for example, two, three, etc., unless otherwise limited specifically clearly.

It is to be understood that a relationship between one element and the other element illustrated in the figures is described by using a space relative term such as "on", "above", "under" and "below" here. In addition to directions described in the accompanying drawings, the space relative terms are also intended to include different directions of the device during use or operations. For example, if the device in the accompanying drawings is turned over, it may be described like this: an element "on" or "above" the other element will be located "under" or "below" the other element. Thus, a term "on" includes two directions of on and under according to a space direction of the device. The device may have directions in other manners (for example, rotating by 90 degrees or in other directions), and the space relative term used here is to be explained correspondingly.

Besides, a phrase "for example" used here is used to represent an example, an instance and an illustration. Any aspect or design described by "for example" here is not necessarily understood as beneficial compared with other aspects or designs. On the contrary, the phrase "for example" is used to present a concept in a specific manner. As used here, a term "or" is intended to represent inclusive "or" but not exclusive "or". Namely, unless otherwise specified or clearly stated from the context, "X applies A or B" is intended to represent any one of arrangement in a natural inclusive arrangement. Namely, "X applies A or B" meets any one of the following examples: X applies A, X applies B, or X applies both A and B. Besides, unless otherwise specified or clearly indicating a singular form from the context, articles "one" and "an" used in the invention and the appended claims are usually understood as representing "one or a plurality of".

It is to be understood that the invention is not limited to an accurate structure described above and shown in the accompanying drawings, and various modifications and changes can be made without departing from its scope. The scope of the invention is limited merely by the appended claims.

## Claims

1. A method for controlling a vehicle, comprising:
obtaining (S11) target scene information of a target video (41) and time range information corresponding to the target scene information; and
controlling (S12) a target device on the vehicle to run in a running state matching with the target scene information within a time range corresponding to the target scene information during a process of playing the target video (41), and
wherein the target device comprises at least one of: an air-conditioner, a seat heating device, an air suspension system, a seat vibrating device, or an electronic fragrance diffuser.

2. The method according to claim 1, wherein
the target scene information comprises high-temperature scene information (442), and the target device comprises at least one of the air-conditioner or the seat heating device; and
controlling (S12) the target device on the vehicle to run in the running state matching with the target scene information within the time range corresponding to the target scene information comprises at least one of:
controlling the air-conditioner to heat an in-vehicle environment within a time range corresponding to the high-temperature scene information (442), or
controlling the seat heating device to be turned on within the time range corresponding to the high-temperature scene information (442);
optionally, controlling the seat heating device to be turned on comprises:
controlling a seat heating device of a seat where a user is seated to be turned on.

3. The method according to claim 2, wherein controlling the air-conditioner to heat the in-vehicle environment comprises:
controlling the air-conditioner to heat the in-vehicle environment so as to increase a temperature of the in-vehicle environment by a first preset ratio without exceeding a first set temperature.

4. The method according to claim 1, wherein
the target scene information comprises low-temperature scene information (441), and the target device comprises at least one of the air-conditioner or the seat heating device; and
controlling (S12) the target device on the vehicle to run in the running state matching with the target scene information within the time range corresponding to the target scene information comprises at least one of:
controlling the air-conditioner to cool an in-vehicle environment within a time range corresponding to the low-temperature scene information (441), or
controlling the seat heating device to be turned off within the time range corresponding to the low-temperature scene information (441).

5. The method according to claim 4, wherein controlling the air-conditioner to cool the in-vehicle environment comprises:
controlling the air-conditioner to cool the in-vehicle environment so as to reduce a temperature of the in-vehicle environment by a second preset ratio without being less than a second set temperature.

6. The method according to claim 1, wherein
the target scene information comprises wind scene information (443), and the target device comprises the air-conditioner; and
controlling (S12) the target device on the vehicle to run in the running state matching with the target scene information within the time range corresponding to the target scene information comprises:
controlling the air-conditioner to run in a higher air blowing gear within a time range corresponding to the wind scene information (443).

7. The method according to claim 1, wherein
the target scene information comprises vibration scene information (444), and the target device comprises at least one of the air suspension system or the seat vibrating device; and
controlling (S12) the target device on the vehicle to run in the running state matching with the target scene information within the time range corresponding to the target scene information comprises at least one of:
controlling the air suspension system to enable a vehicle body to perform at least one of swinging or vibrating within a time range corresponding to the vibration scene information (444), or
controlling the seat vibrating device to be turned on within the time range corresponding to the vibration scene information (444);
optionally, controlling the seat vibrating device to be turned on comprises:
controlling a seat vibrating device of a seat where a user is seated to be turned on.

8. The method according to any one of claims 1 to 7, wherein
the target device further comprises a first ambient light; and
controlling (S12) the target device on the vehicle to run in the running state matching with the target scene information within the time range corresponding to the target scene information comprises:
controlling the first ambient light to run in a display mode matching with the target scene information within the time range corresponding to the target scene information.

9. The method according to claim 8, wherein controlling the first ambient light to run in the display mode matching with the target scene information within the time range corresponding to the target scene information comprises:
determining (S121) a dominant hue of a picture of the target video (41) at a start moment corresponding to the target scene information; and
controlling (S122) the first ambient light to emit light in a color matching with the dominant hue of the picture within the time range corresponding to the target scene information.

10. The method according to any one of claims 1 to 9, further comprising:
determining (S21) video type information (43) of the target video (41); and
controlling (S22) a second ambient light to run in a display mode matching with the video type information (43) during the process of playing the target video (41).

11. The method according to any one of claims 1 to 10, wherein
the target scene information comprises smell scene information (445), and the target device comprises the electronic fragrance diffuser; and
controlling (S12) the target device on the vehicle to run in the running state matching with the target scene information within the time range corresponding to the target scene information comprises:
controlling the electronic fragrance diffuser to release a smell matching with the smell scene information (445) within a time range corresponding to the smell scene information (445).

12. The method according to any one of claims 1 to 11, wherein obtaining (S11) the target scene information of the target video (41) and the time range information corresponding to the target scene information comprises:
identifying the target scene information and the time range information corresponding to the target scene information in real time from the target video (41) based on a scene identification model.

13. A vehicle (200), comprising:
a processor (251); and
a memory (252) configured to store instructions executable by the processor (251);
wherein the processor (251) is configured to execute the instructions to perform the steps of the method according to any one of claims 1 to 12.

14. A computer-readable storage medium, storing a computer program, wherein the computer program, when executed by a processor, implements the steps of the method according to any one of claims 1 to 12.

15. A computer program product, comprising a computer program, wherein the computer program, when executed by a processor, implements the steps of the method according to any one of claims 1 to 12.
